# FASCICULE DE BREVET EUROPEEN

(11) **EP 0 362 009 B1**
(45) Date de publication et mention de la délivrance du brevet: **18.08.1993**
(21) Numéro de dépôt: 89402508.9
(22) Date de dépôt: 13.09.1989
(51) Int. Cl.: G21C 3/334

(54) **Dispositif et procédé d'extraction d'un manchon de blocage d'un tube-guide démontable d'un assemblage combustible d'un réacteur nucléaire**
Vorrichtung und Verfahren zum Herausziehen von Blockierhülsen aus Führungsrohren von zerlegbaren Kernreaktorbrennstabbündeln
Device and method to extract locking sleeves from guide tubes of reconstituable nuclear reactor fuel assemblies

(30) Priorité: 19.09.1988 FR 8812207
(43) Date de publication de la demande: 04.04.1990
(73) Titulaire: FRAMATOME, 92400 Courbevoie (FR); COGEMA, F-78141 Velizy Villacoublay (FR)
(72) Inventeur: Guironnet, Louis, F-69009 Lyon (FR); Bline, Michel, F-69210 l'Arbresle (FR)
(74) Mandataire: Bouget, Lucien

(56) Documents cités:
- EP-A- 0 182 149
- EP-A- 0 189 797
- EP-A- 0 223 342

## Description

L'invention concerne un dispositif et un procédé d'extraction d'un manchon de blocage d'un tube-guide démontable d'un assemblage combustible d'un réacteur nucléaire refroidi à l'eau sous pression.

Les réacteurs nucléaires refroidis à l'eau et en particulier les réacteurs nucléaires à eau sous pression comportent des assemblages constitués par un faisceau de crayons combustibles de grande longueur disposés parallèlement les uns aux autres et maintenus dans une ossature formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités à l'un ou à l'autre de deux embouts constituant des pièces de rigidification et de fermeture de l'assemblage.

Les crayons combustibles de l'assemblage constituent un faisceau dans lequel les crayons sont parallèles entre eux et disposés, dans les sections transversales de l'assemblage, suivant un réseau régulier déterminé par les entretoises. Certaines positions du réseau sont occupées par des tubes-guides qui sont généralement reliés de manière rigide aux entretoises.

Les tubes-guides ont une longueur supérieure à la longueur des crayons combustibles et sont placés dans le faisceau, de manière à comporter une partie saillante par rapport au faisceau de crayons combustibles à chacune de leurs extrémités. Les embouts sont fixés sur ces parties saillantes des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accèder aux crayons combustibles et effectuer leur remplacement, il est nécessaire de démonter l'un des embouts de l'assemblage, ce qui suppose de supprimer les liaisons entre les extrémités correspondantes des tubes-guides et l'embout.

Les embouts comportent des trous traversants reproduisant le réseau des tubes-guides dans chacun desquels est engagé et fixé un tube-guide.

Dans la technique la plus courante, les tubes-guides sont fixés de manière permanente sur les embouts, généralement par soudage, et il n'est pas possible de réaliser le démontage de l'embout pour effectuer le remplacement d'un crayon. Il est donc nécessaire, dans le cas d'une rupture de gaine sur un crayon, de replacer l'assemblage combustible défectueux par un assemblage combustible neuf. L'assemblage combustible défectueux est démantelé et les crayons combustibles non défectueux mais fortement irradiés contenus dans cet assemblage sont récupérés et remontés dans une ossature d'assemblage combustible neuf. Pour réaliser ces opérations et manipulations d'éléments contaminés, il est nécessaire de prendre des précautions et d'opérer dans des installations complexes et coûteuses. La récupération des crayons combustibles non épuisés dans les assemblages défectueux est donc une opération très onéreuse.

On a donc conçu et mis au point de nouveaux assemblages combustibles comportant des tubes-guides dont la liaison avec l'un au moins des embouts d'extrémité est démontable.

L'assemblage est placé sous eau en position verticale, dans une piscine telle qu'une piscine de stockage d'assemblages combustibles dans laquelle on effectue le remplacement des crayons combustibles défectueux. Les tubes-guides de l'assemblage sont dans une position verticale, l'assemblage reposant sur le fond de la piscine par l'un des embouts ou embout inférieur. L'autre embout ou embout supérieur est accessible, sous une certaine hauteur d'eau, depuis le dessus de la piscine. Les parties des tubes-guides engagées dans l'embout supérieur de l'assemblage comportent une partie expansible radialement qui peut être, par exemple, rapportée à l'extrémité du tube-guide. Cette partie expansible radialement est constituée par une douille fendue présentant une partie en saillie radiale qui est destinée à venir se loger dans une cavité de forme correspondante usinée à l'intérieur de l'embout, dans le trou de passage du tube-guide. Un manchon de blocage introduit à l'intérieur du tube-guide réalise l'expansion radiale de la douille fendue et l'accrochage du tube-guide.

Le démontage de l'embout supérieur de l'assemblage nécessite le démontage de la liaison de chacun des tubes-guides qui peut être effectué par extraction du manchon de blocage accessible par l'intérieur depuis le dessus de l'embout supérieur.

On a donc prévu des dispositifs permettant d'effectuer l'extraction d'un manchon de blocage d'un tube-guide dans un embout supérieur d'un assemblage placé dans une piscine en position verticale. On a également prévu des dispositifs pour effectuer la mise en place d'un manchon de blocage dans un tube-guide, lors du remontage de l'embout supérieur de l'assemblage.

Par le EP-A-0.182.149, on connaît en particulier un dispositif d'extraction des manchons de blocage des tubes-guides d'un assemblage combustible démontable qui comporte un élément tubulaire présentant des fentes qui peut être dilaté radialement grâce à une tige munie d'une olive d'extrémité et montée mobile à l'intérieur de l'élément tubulaire. L'élément tubulaire comporte un rebord annulaire en saillie radiale vers l'extérieur. L'outillage comportant l'élément tubulaire expansible est monté sur une plaque de centrage qu'on vient placer sur l'embout supérieur de l'assemblage, ce qui permet d'introduire l'élément tubulaire dans un tube-guide muni intérieurement d'un manchon de blocage. Une butée réglable permet d'ajuster la longueur de l'élément tubulaire introduite dans le tube, de façon que le rebord en saillie vienne se placer juste en-dessous du manchon de blocage. Le déplacement de la tige permet de dilater l'léément tubulaire et de réaliser la mise en appui du rebord sur la partie inférieure du manchon de blocage.

Le décollement et l'extraction du manchon de blocage sont effectués en soumettant la partie supérieure de l'outil à des chocs répétés.

Ce dispositif est d'une mise en oeuvre délicate, puisqu'il nécessite la pose d'une plaque de centrage puis un réglage de la butée d'ajustement de la profondeur d'intervention, ces opérations devant être effectuées sous eau, à l'intérieur d'une piscine. En particulier, il est difficile d'assurer une mise en position très précise du rebord en saillie de l'élément expansible, sous le manchon de blocage.

En outre, l'extraction étant effectuée par chocs, les à-coups successifs subis par le tube et l'embout supérieur de l'assemblage peuvent entraîner certaines détériorations. L'opération d'extraction est de toutes façons relativement longue, dans la mesure où il est nécessaire de retirer successivement, pour chaque assemblage, vingt-quatre manchons de blocage disposés chacun dans un des vingt-quatre tubes-guides, avant d'effectuer la dépose de l'embout supérieur.

On connaît également d'autres dispositifs reposant sur le même principe et dans lesquels l'extraction est effectuée par le déplacement d'une plaque, sur laquelle est fixé l'élément tubulaire expansible de l'outil, grâce à un dispositif vis-écrou. L'outil comporte une seconde plaque venant en appui sur l'embout supérieur de l'assemblage, si bien que la réaction des efforts d'extraction sur les bossages de l'embout supérieur risque de provoquer des déformations nécessitant son remplacement pour effectuer un remontage correct de l'assemblage combustible.

En outre, dans tous ces dispositifs, le manchon extrait reste engagé sur la broche d'extraction, si bien qu'il n'est pas possible d'utiliser à nouveau l'outillage sans avoir séparé le manchon de la broche. Il est nécessaire de remonter l'outillage pour effectuer cette opération de séparation du manchon au niveau du plancher de service de la piscine. Il en résulte des pertes de temps occasionnées par les déplacements de l'outillage pour sa remontée et sa descente dans la piscine.

Un but de l'invention est donc de proposer un dispositif d'extraction d'un manchon de blocage d'un tube-guide dans un embout démontable d'un assemblage combustible d'un réacteur nucléaire, l'assemblage constitué par un faisceau de crayons combustibles parallèles maintenus dans une ossature formée par des tubes-guides, des entretoises et deux embouts d'extrémité étant placé sous eau dans une piscine, les tubes-guides en position verticale étant reliés de manière démontable à l'embout d'extrémité situé au niveau supérieur de l'assemblage, grâce à une partie d'extrémité du tube-guide déformable radialement logée dans un trou traversant l'embout supérieur comportant une partie d'accrochage en saillie radiale et recevant un manchon de blocage dans sa partie interne pour réaliser l'expansion radiale et l'accrochage du tube-guide par sa partie d'accrochage dans un élargissement annulaire du trou de l'embout, ce dispositif d'extraction étant d'une mise en oeuvre simple et ne risquant pas d'entraîner des détériorations de l'assemblage combustible.

Dans ce but, le dispositif suivant l'invention comporte :
- une perche fixée en position verticale à un moyen de manutention et de levage disposé au-dessus de la piscine, comportant au moins une partie d'extrémité inférieure dont le diamètre est inférieur au diamètre intérieur du manchon de blocage percée d'un alésage central de direction axiale et d'au moins deux ouvertures radiales communiquant avec l'alésage central et débouchant sur la surface externe de la perche, une tige montée coulissante dans l'alésage et reliée à sa partie supérieure à un moyen de déplacement axial porté par la perche et présentant une partie inférieure à diamètre réduit par rapport à sa partie courante et au moins deux griffes d'accrochage, chacune montée mobile radialement dans une ouverture radiale, entre une position rétractée où l'extrémité externe de la griffe dans la direction radiale se trouve comprise à l'intérieur du périmètre intérieur du manchon de blocage et une position d'extraction où la griffe est saillante par rapport au périmètre intérieur du manchon de blocage, grâce à la tige se déplaçant de manière à présenter soit sa partie courante, soit sa partie à diamètre réduit, en coïncidence avec les griffes et à un moyen de rappel élastique,
- une cale de réglage d'espacement entre la perche et l'embout supérieur, pour régler la position axiale de la perche par rapport au tube-guide, dans lequel on réalise l'extraction,
- et un moyen de déplacement vertical de la perche.

Un autre but de l'invention est de proposer un procédé d'extraction d'un tube guide dans un embout démontable d'un assemblage combustible d'un réacteur nucléaire selon la revendication 11.

Afin de bien faire comprendre l'invention, on va maintenant décrire, à titre d'exemple non limitatif, en se référant aux figures jointes en annexe, plusieurs modes de réalisation d'un dispositif d'extraction suivant l'invention utilisé pour le démontage d'embouts supérieurs d'assemblages combustibles de réacteur nucléaire à eau sous pression.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

La figure 5 est une vue en coupe axiale des éléments de fixation d'un tube-guide dans l'embout supérieur de l'assemblage.

La figure 6 est une vue en élévation de la partie d'extrémité du tube-guide assurant son accrochage dans l'embout supérieur.

La figure 7A est une vue en coupe d'un manchon de blocage suivant un premier mode de réalisation.

La figure 7B est une vue en coupe d'un manchon de blocage suivant un second mode de réalisation.

La figure 7C est une vue en coupe d'un manchon de blocage suivant un troisième mode de réalisation.

La figure 7D est une vue en coupe d'un manchon de blocage suivant une variante du troisième mode de réalisation.

La figure 8 est une vue en coupe axiale d'un dispositif d'extraction suivant l'invention et suivant un premier mode de réalisation.

La figure 9 est une vue en coupe axiale d'un dispositif d'extraction suivant l'invention et suivant un second mode de réalisation.

Les figures 9A, 9B et 9C sont des vues en coupe de la figure 9, suivant 9A, 9B et 9C respectivement.

Les figures 10 et 10A sont des demi-vues en coupe axiale à grande échelle de la partie inférieure du dispositif d'extraction représenté sur la figure 8.

Les figures 10B, 10C et 10D, 10E, 10F et 10G sont des demi-vues en coupe suivant 10B, 10C, 10D, 10E, 10F, 10G respectivement de la figure 10 ou 10A.

La figure 11 est une vue schématique en élévation et en coupe du dispositif d'extraction suivant l'invention pendant l'éjection dans un bac de stockage, d'un manchon qui vient d'être extrait.

La figure 12 est une vue de dessus suivant 12 du bac de stockage représenté sur la figure 11.

La figure 13 et une vue de face en élévation et en coupe d'un dispositif d'extraction suivant l'invention et suivant une seconde variante de réalisation.

La figure 14 est une vue de profil en élévation et en coupe partielle du dispositif représenté sur la figure 13.

La figure 15 est une vue en élévation et en coupe d'un dispositif d'extraction suivant l'invention et suivant un troisième mode de réalisation, permettant l'extraction simultanée d'une pluralité de manchons de blocage.

La figure 16 est une vue de dessus de l'embout supérieur d'un assemblage sur lequel est mis en oeuvre le dispositif d'extraction représenté sur la figure 15.

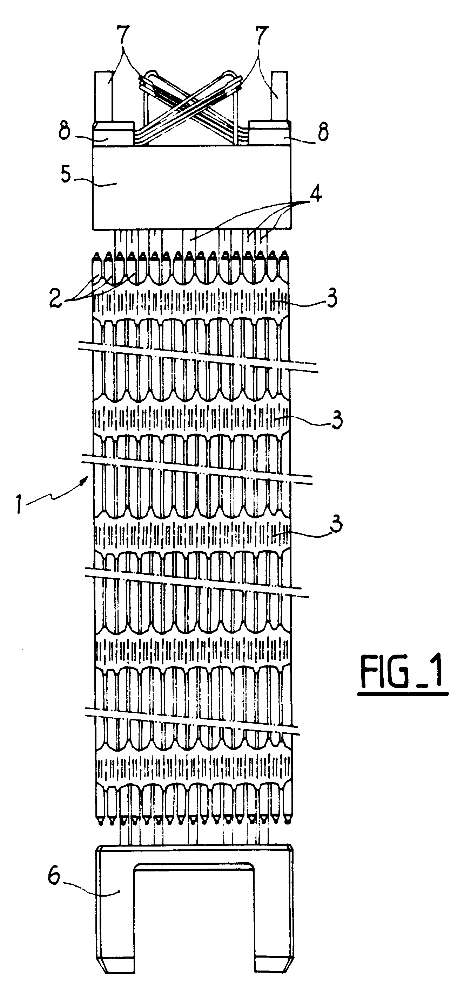

Sur la figure 1, on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions du réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout 6 constituant l'embout inférieur.

Dans sa position de service ou dans sa position de stockage, l'assemblage est placé verticalement comme représenté sur la figure 1.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur, dont la plaque supérieure de coeur vient reposer sur les ressorts 7. L'embout comporte également des plots 8 saillants par rapport à sa face supérieure.

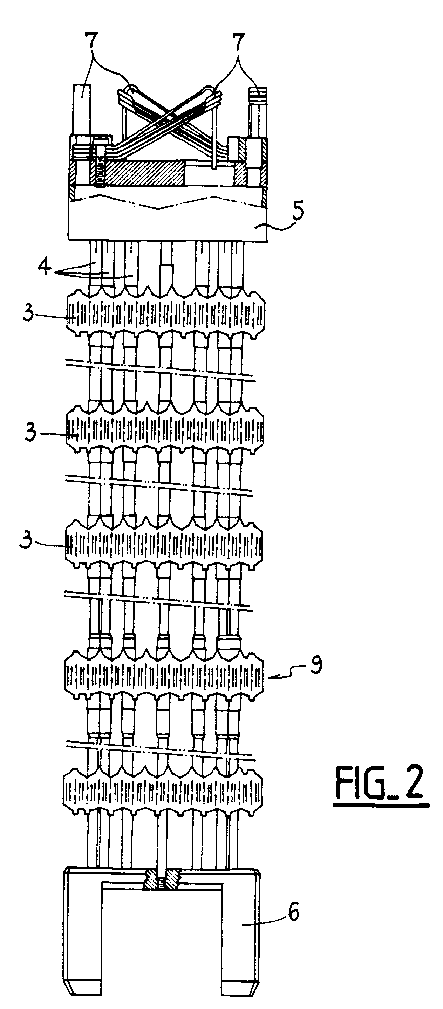

Sur la figure 2, on a représenté l'ossature 9 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables entre l'extrémité des tubes-guides 4 et l'embout supérieur 5.

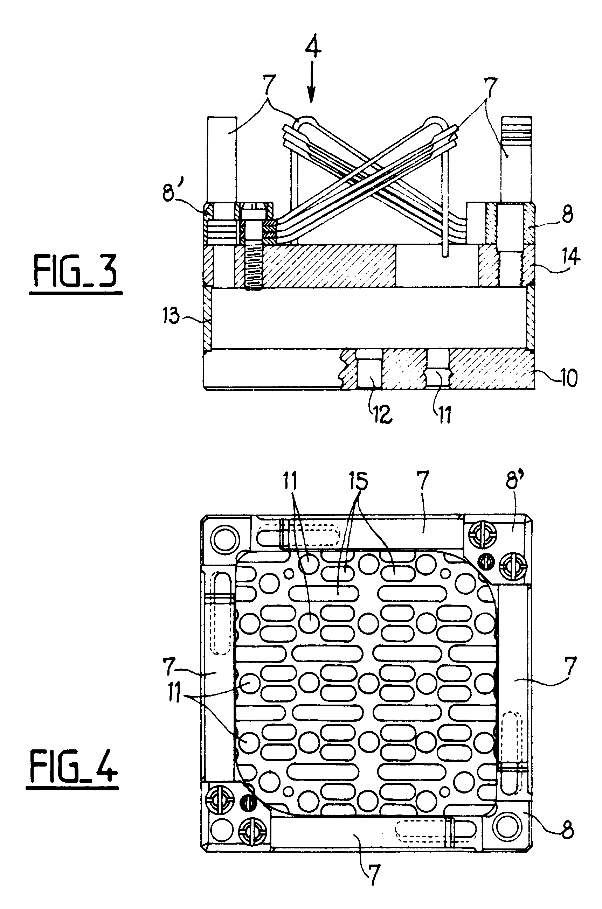

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible. Le tube-guide d'instrumentation de l'assemblage combustible situé en partie centrale est reçu dans une ouverture 12 de forme particulière. L'embout supérieur de l'assemblage est constitué par la plaque adaptatrice 10 et par un cadre 14 reliés entre eux par l'intermédiaire d'une jupe 13 soudée sur la plaque 10 et sur le cadre 14. Le cadre 14 porte les bossages 8 comportant les ouvertures de centrage et des brides 8' de maintien des ressorts 7.

Comme il est visible sur la figure 4, les trous de passage 11 permettant la fixation des tubes-guides 4 sont disposés dans des positions définies correspondant aux positions des vingt-quatre tubes-guides de l'assemblage. Des trous de passage d'eau 15 traversent la plaque adaptatrice 10 de l'embout entre les ouvertures traversantes 11 des tubes-guides.

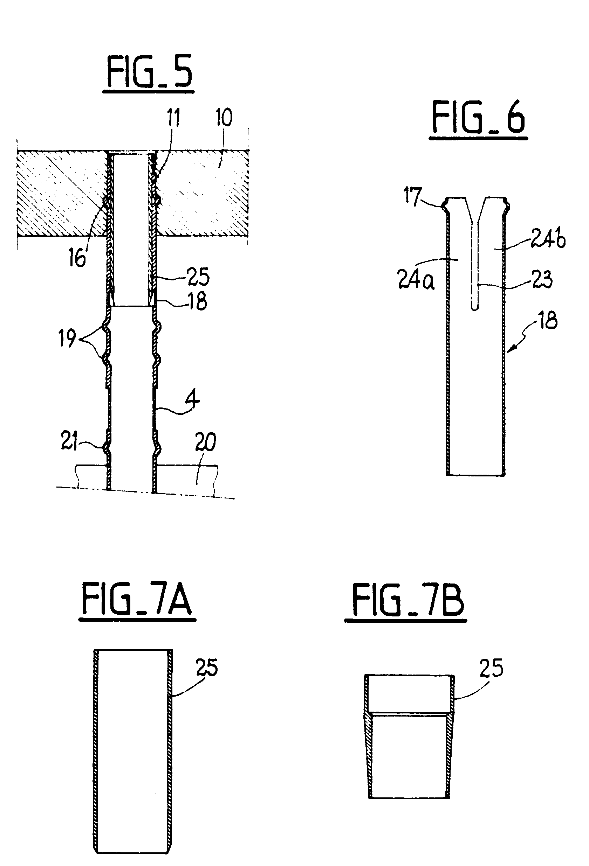

Comme il est visible sur la figure 5, les ouvertures traversantes 11 de la plaque adaptatrice 10 recevant les tubes-guides 4 comportent un élargissement annulaire 16 dans lequel vient se loger une saillie torique 17 prévue à l'extrémité supérieure du tube-guide 4.

Dans le mode de réalisation représenté sur les figures 5 et 6, la partie supérieure 18 du tube-guide 4 est constituée par un manchon rapporté à l'extrémité supérieure de ce tube-guide et fixé par des zones annulaires déformées 19 du manchon 18 et du tube-guide 4.

Un manchon 21 de traversée de la grille-entretoise supérieure 20 est également fixé sur le tube-guide par déformation annulaire de la paroi latérale du tube-guide et du manchon.

Le manchon 18 comporte deux fentes 23 diamétralement opposées et délimitant deux secteurs cylindriques 24a et 24b dans la paroi du manchon 18. Les deux secteurs cylindriques 24a et 24b qui comportent la saillie annulaire 17 au voisinage de leurs extrémités permettent une certaine expansion ou une certaine rétraction diamétrale de l'extrémité du manchon 18.

Pour assurer le montage du tube-guide, le manchon 18 est introduit dans une ouverture traversante 11 de la plaque adaptatrice 10 de manière à mettre en coïncidence les saillies annulaires 17 avec la partie élargie 16 de l'ouverture. Cette introduction peut être réalisée facilement grâce à la rétraction diamétrale des secteurs cylindriques élastiques 24a et 24b.

Le blocage en position du tube-guide est assuré par introduction d'un manchon de blocage 25 dans le manchon 18, par la face supérieure de la plaque adaptatrice 10. Le manchon de blocage 25 peut être par exemple de forme cylindrique comme représenté sur la figure 7A ou de forme légèrement tronconique comme représenté sur la figure 7B.

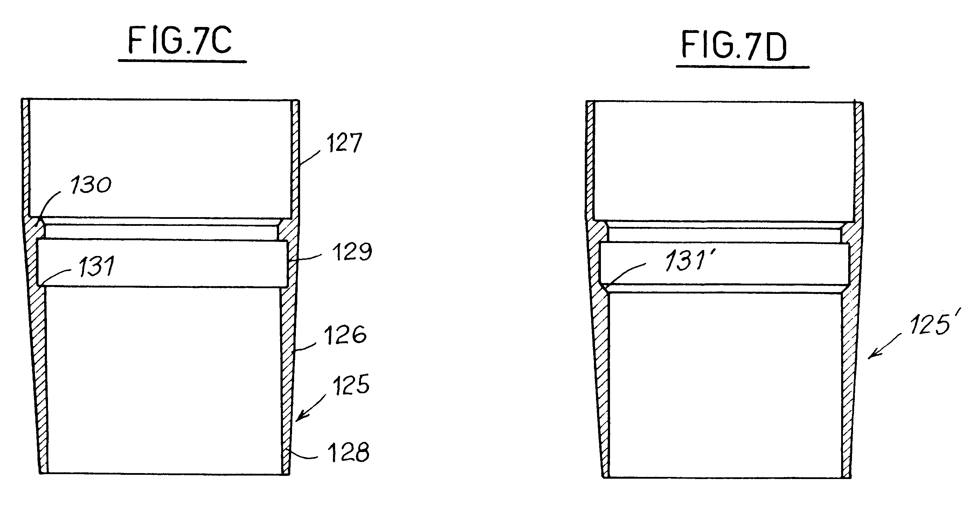

Sur les figures 7C et 7D, on a représenté un manchon de blocage 125 de forme extérieure cylindro-tronconique qui permet de réaliser le blocage en position d'un tube-guide, d'une manière sûre, par des opérations simples. Comme il sera indiqué plus loin, la mise en oeuvre de l'invention est également réalisée d'une manière avantageuse, lorsqu'on utilise un manchon de blocage 125 tel que représenté sur la figure 7C ou sur la figure 7D.

Le manchon de blocage 125 comporte une paroi tubulaire 126 en une seule pièce dont la surface externe présente une partie supérieure cylindrique et une partie inférieure tronconique reliées par la grande base de la partie tronconique.

L'épaisseur de la paroi 126 est variable suivant la hauteur de cette paroi. La partie supérieure 127 de la paroi constitue une virole de faible épaisseur. L'alésage intérieur de la partie inférieure 128 du manchon de blocage est de forme cylindrique, si bien que la paroi présente une épaisseur décroissante de haut en bas dans cette partie inférieure 128.

La partie 128 de la paroi comporte une gorge annulaire 129 au voisinage de son extrémité supérieure, dans sa partie de forte épaisseur.

La virole 127 est séparée de la partie tronconique 128 par un rebord 130 en saillie radiale vers l'intérieur du manchon. La gorge 129 est délimitée du côté opposé au rebord 130, c'est-à-dire vers le bas par un épaulement 131.

La gorge 129 peut être utilisée pour la mise en place du manchon de blocage 125 dans un tube-guide, en introduisant un outil de préhension dans la gorge 129, comme il sera expliqué plus loin. Une poussée axiale peut être exercée sur le manchon 125, par l'intermédiaire de l'épaulement 131, pour réaliser le blocage du tube-guide dont l'écartement est maintenu par la partie tronconique 128 engagée dans le tube-guide.

La virole 127 est alors située dans une partie de l'alésage de l'embout de l'assemblage qui n'est pas occupée par le tube-guide. Une ou plusieurs saignées radiales sont usinées dans cette partie de l'alésage de l'embout. Après blocage du tube-guide, la virole 127 est repoussée à l'intérieur des saignées radiales de l'alésage de l'embout dans lesquelles elle assure la fixation du manchon de blocage.

Sur la figure 7D, on a représenté une variante de réalisation du manchon de blocage de la figure 7C. Le manchon 125' est identique au manchon 125 mis à part le fait qu'il comporte un épaulement tronconique 131' à la place de l'épaulement plan 131 utilisé lors de la mise en place du manchon de blocage dans le tube-guide.

Dans tous les cas, le démontage de la liaison entre le tube-guide 4 et la plaque adaptatrice 10 peut être assuré par extraction du manchon de blocage 25 de manière à permettre une rétraction diamétrale du manchon 18 constituant la partie supérieure du tube-guide à l'intérieur de la plaque adaptatrice.

Cette opération d'extraction des manchons de blocage des tubes-guides d'un assemblage peut être réalisée sous eau dans une piscine où se trouve stocké l'assemblage.

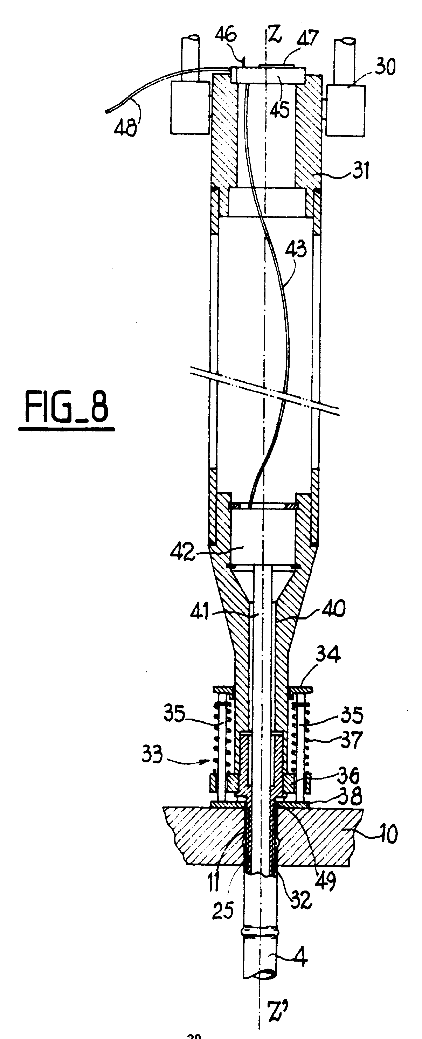

On utilise, suivant l'invention, un dispositif tel que représenté sur la figure 8 qui est suspendu par une anse de manutention 30 à un moyen de manutention et de levage disposé au-dessus de la piscine.

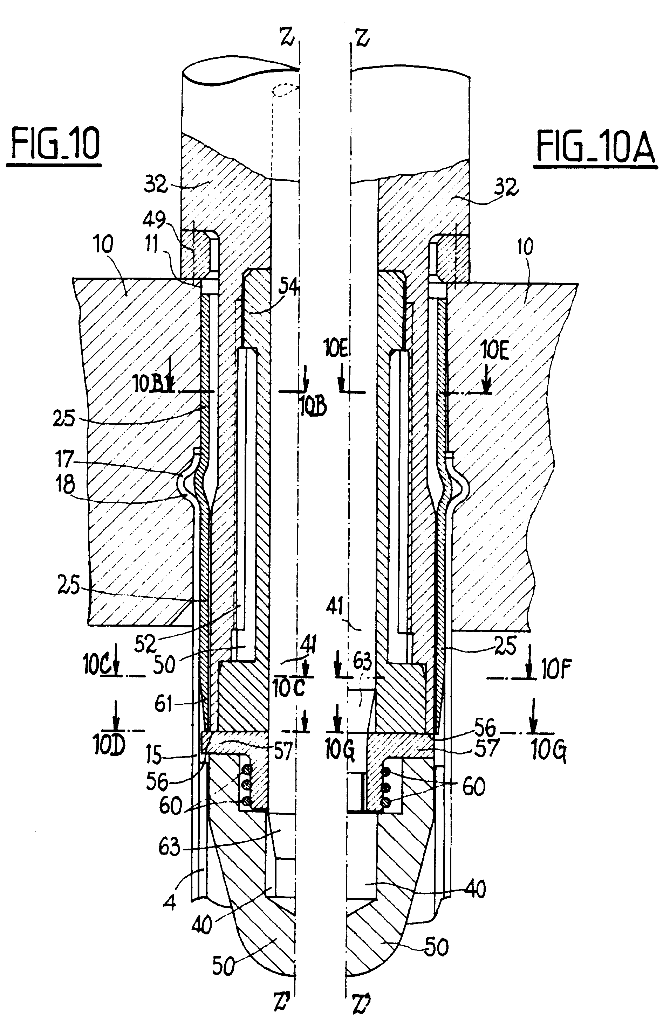

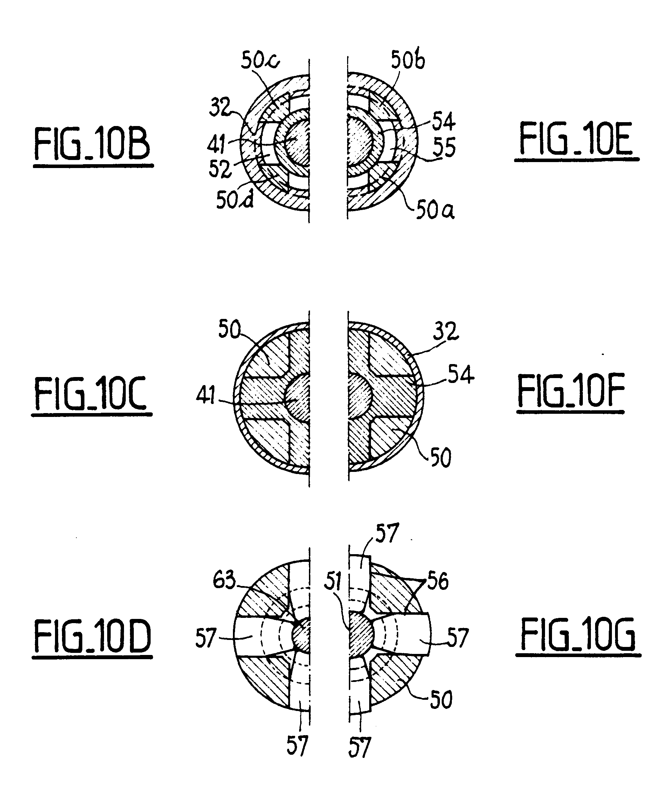

Le dispositif comporte principalement une perche tubulaire 31 dont la longueur peut être de l'ordre de quatre mètres. La perche 31 comporte une partie inférieure constituée par une pièce rapportée de forme tubulaire 32 qui sera décrite de manière plus détaillée en se référant aux figures 10 et 10A. Cette partie inférieure 32 appelée broche présente un diamètre extérieur légèrement inférieur au diamètre intérieur du manchon de blocage 25 du tube 4, dans la plaque adaptatrice 10 de l'embout supérieur de l'assemblage en cours de démontage.

Autour de la partie d'extrémité de la perche 31 sur laquelle est fixée la broche 32, est disposé un ensemble 33 d'éjection des manchons de blocage. Cet ensemble 33 comporte une plaque supérieure 34 montée coulissante sur l'extrémité de la perche 31 constituant un poussoir d'éjection sur lequel est fixé un ensemble de tiges 35 montées coulissantes dans une pièce de guidage 36 solidaire de la partie 32 de la perche et rappelées en position haute par des ressorts 37 en appui sur la plaque 36.

L'extrémité des tiges 35 opposée à la plaque 34 est fixée à une platine d'éjection 38 montée coulissante sur la surface extérieure de la broche 32 de la perche. L'actionnement du poussoir 34 vers le bas permet d'éjecter un manchon de blocage qui vient d'être extrait d'un tube-guide et qui est resté enfilé sur la broche 32 de la perche, après levage de celle-ci.

La perche 31 comporte, à l'intérieur de sa partie inférieure 32 et dans le prolongement de celle-ci un alésage central de direction axiale 40 dans lequel une tige 41 est montée coulissante. La partie supérieure de la tige 41 est solidaire de la tige d'un vérin 42 alimenté en fluide sous pression par une conduite 43 reliée à la partie supérieure de la perche, à un boîtier de commande 45 sur lequel est montée une clé 46 permettant de réaliser la commande du vérin 42. Une jauge de niveau 47 est fixée à la partie supérieure de la perche, sur le boîtier de commande, pour régler la verticalité de l'axe ZZ' de la perche.

Le dispositif d'extraction est alimenté par un flexible 48 relié à une source d'énergie disponible dans le bâtiment du réacteur, dans le cas où le dispositif est utilisé pour le remplacement de crayons dans des assemblages disposés dans la piscine du réacteur.

Pour réaliser la mise en oeuvre du dispositif suivant l'invention, celui-ci est placé à l'aplomb d'une ouverture traversante de la plaque adaptatrice 10 dans laquelle est fixé un tube- guide 4 par l'intermédiaire d'un manchon de blocage 25. La partie inférieure 32 de la perche est introduite dans l'ouverture 11 jusqu'au moment où la platine d'éjection 38 vient en contact avec la face supérieure de la plaque adaptatrice 10. Une cale 49 intercalée entre la broche 32 de la perche et la platine d'éjection 38 permet de régler avec précision la profondeur d'enfoncement de l'outil dans le tube-guide et le positionnement de l'outillage d'extraction par rapport au manchon de blocage 25.

Sur les figures 10 et 10A, on a représenté à plus grande échelle la broche 32 en position d'extraction à l'intérieur d'un tube-guide 4 et d'un manchon de blocage 25, suivant la figure 7A. Toutefois, l'ensemble d'éjection 33 n'a pas été représenté pour plus de clarté et la cale de réglage de profondeur 49 a été représentée fixée sur la partie supérieure de la plaque adaptatrice 10.

Sur la figure 10A, le dispositif d'extraction a été représenté dans sa position rétractée permettant son passage à l'intérieur du manchon de blocage 25. En revanche, sur la figure 10, le dispositif a été représenté dans sa position permettant l'extraction du manchon de blocage 25.

La partie d'extrémité supérieure du tube-guide 4 constituée par le manchon expansible 18 comportant la saillie annulaire 17 est maintenue en position dans la plaque adaptatrice 10 par le manchon de blocage 25 engagé dans l'extrémité du tube-guide et dans l'ouverture 11 de la plaque adaptatrice.

Le manchon 25 est bloqué axialement à l'intérieur de la partie supérieure du tube-guide, par une expansion radiale de forme annulaire effectuée au niveau de la saillie annulaire 17 du tube-guide logé dans l'élargissement annulaire du trou traversant 11.

La partie inférieure 32 de la perche est constituée, comme il est visible sur les figures 10, 10A et 10B à 10G, par un embout 50 comportant une partie d'extrémité tronconique terminée par une surface sphérique vissée à l'intérieur d'un alésage 52 ménagé axialement dans la broche 32, avec interposition d'une entretoise 54 comportant un alésage central constituant une partie de l'alésage 40 de la perche dans lequel coulisse la tige 41.

Comme il est visible sur les figures 10B et 10E, la partie filetée de la pièce 50 comporte quatre parties 50a, 50b, 50c, 50d entre lesquelles sont ménagées des lumières axiales 55.

Sur les figures 10C et 10F, on voit que la partie inférieure de l'entretoise 54 comporte une section de forme cruciforme dans les angles de laquelle viennent se loger quatre parties de la pièce 50 qui sont prolongées vers le haut par les quatre secteurs filetés 50a, 50b, 50c, 50d. Entre la partie inférieure de l'entretoise 54 et la partie d'extrémité de la pièce 50, sont ménagées quatre ouvertures radiales 56 dans chacune desquelles est logée une griffe 57.

Les quatre griffes 57 sont rappelées vers l'axe ZZ' de la perche par des ressorts de rappel 60. Les quatre griffes 57 sont susceptibles de se déplacer dans les ouvertures radiales 56 entre une position de retrait représentée sur la figure 10A et une position extraite représentée sur la figure 10.

Dans la position rétractée des griffes 57, l'extrémité disposée radialement et vers l'extérieur de ces griffes se trouve dans le périmètre intérieur du manchon de blocage 25.

Au contraire, dans la position extraite des griffes, l'extrémité externe de ces griffes dans la direction radiale se trouve à l'extérieur du périmètre intérieur du manchon 25. D'autre part, le réglage de la cale 49 est tel que les griffes 57 viennent se glisser exactement sous l'extrémité inférieure 61 du manchon de blocage 25.

Dans le cas d'un manchon de blocage 125 ou 125' tel que représenté sur les figures 7C et 7D, la conception de la broche 32 de l'outil et le réglage de la cale 49 sont tels que les griffes 57 viennent se mettre en place au niveau de la gorge 129 du manchon de blocage.

On voit également que le centrage de la partie inférieure de la pièce 50 est assuré par le tube-guide 4 lui-même dont le diamètre intérieur est très légèrement supérieur au diamètre de la partie cylindrique de la pièce 50 située juste au-dessus de la partie tronconique d'engagement.

Sur la figure 10G les griffes 57 ont été représentées en position extraite et sur la figure 10D en position rétractée. On voit également sur ces figures 10D et 10G que les ouvertures radiales 56 sont délimitées chacune entre deux parties voisines de la pièce 50.

La tige 41 comporte, à sa partie inférieure, une partie 63 à diamètre réduit par rapport à la partie courante de la tige 41.

Lorsque la partie courante de la tige est en contact avec la surface intérieure des griffes 57, ces griffes sont repoussées vers l'extérieur en position extraite à l'encontre des ressorts 60. Au contraire, lorsque la partie 63 à diamètre réduit est mise en coïncidence avec la surface intérieure des griffes 57, les ressorts 60 provoquent la rétraction des griffes jusqu'à leur position représentée sur la figure 10A. Dans cette position des griffes, la partie inférieure de la perche peut être introduite dans le tube de blocage 25 et placée, grâce à la cale 49, dans la position représentée sur les figures 10 et 10A. On provoque alors un déplacement de la tige 41 vers le bas en alimentant le vérin 42, ce qui provoque l'extraction des griffes 57.

L'extraction du tube de blocage 25 peut être réalisée en maintenant la tige 41 dans sa position basse par maintien de la pression dans le vérin 42 et en exerçant une traction à la verticale et vers le haut sur la perche, par exemple par l'intermédiaire du treuil d'un pont roulant disposé au-dessus de la piscine du réacteur, dont le crochet est relié à l'anse de manutention 30 de la perche. Le poids de l'assemblage combustible est suffisant pour assurer son maintien en fond de piscine pendant l'extraction.

On réalise ainsi l'extraction du manchon de blocage 25 sans prendre appui sur l'assemblage combustible et en exerçant un effort de direction axiale sur la partie inférieure du manchon de blocage 25. Dans le cas d'un manchon 125 ou 125' tel que représenté sur ls figures 7C et 7D, l'effort axial de l'outil est exercé sur le manchon, par l'intermédiaire de la gorge 129 et permet de déformer la virole 127 de manière à extraire ses parties déformées des saignées radiales de l'alésage de l'embout.

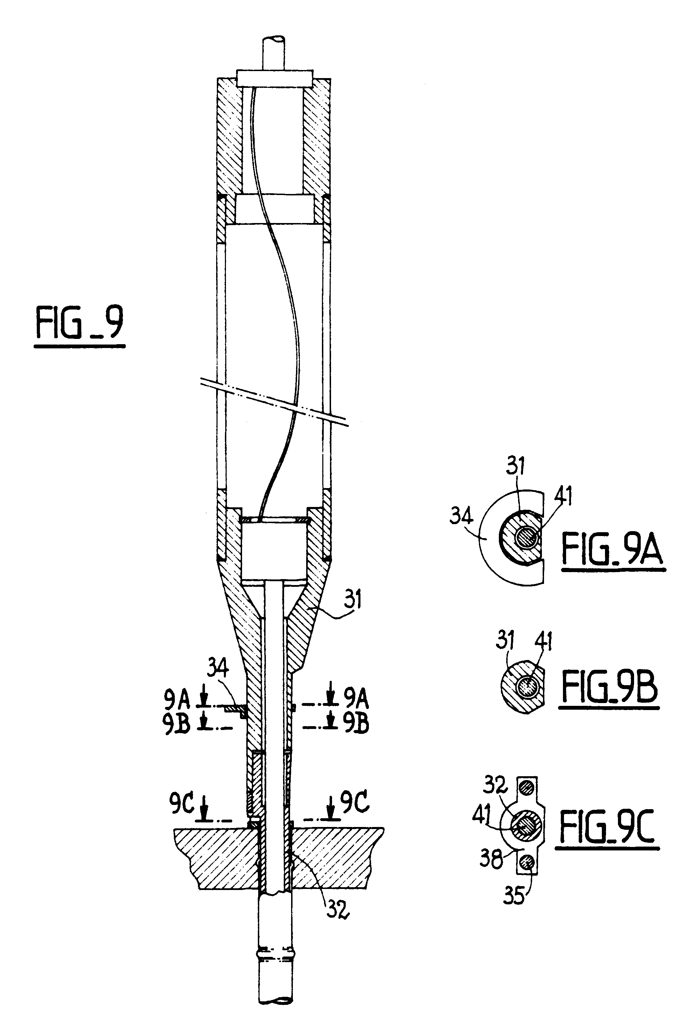

Sur la figure 9, et sur les figures 9A, 9B et 9C, on a représenté un second mode de réalisation d'un dispositif d'extraction suivant l'invention adapté à l'extraction de manchons de blocage dans les tubes-guides périphériques de l'assemblage au voisinage du cadre 14 et de la jupe 13 de l'embout supérieur.

La forme générale du dispositif est la même que celle du dispositif représenté sur la figure 8.

On voit en particulier la forme donnée au poussoir d'éjection 34, à la platine d'éjection 38 et à la partie d'extrémité inférieure de la perche 31, pour permettre de placer ces éléments au voisinage immédiat d'une des parois de l'embout.

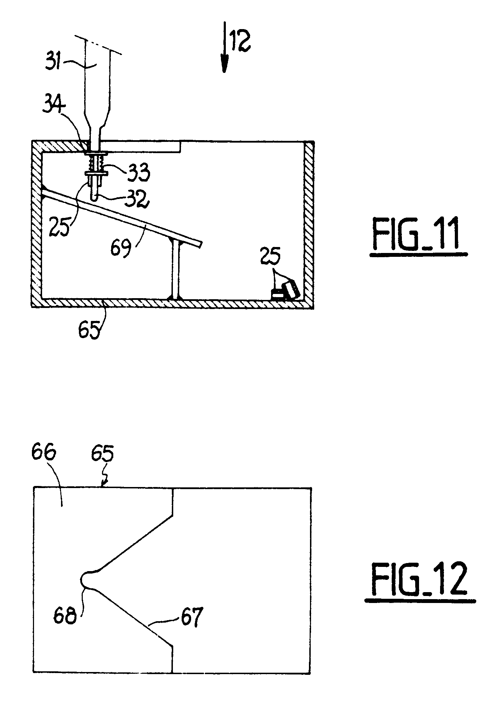

Sur les figures 11 et 12, on voit un bac de récupération 65 des manchons de blocage 25 extraits de tubes-guides grâce au dispositif selon l'invention. Le bac de récupération 65 comporte une paroi supérieure 66 comportant une découpe en forme de V 67 terminée par une cavité 68 destinée à recevoir l'extrémité de la perche 31 amenée grâce au dispositif de manutention du réacteur à la verticale du bac de récupération 65 disposé à proximité immédiate de l'embout supérieur dont on effectue le démontage. La partie inférieure 32 de la perche 31 a permis de réaliser l'extraction d'un manchon de blocage 25 comme il a été décrit plus haut. Ce manchon de blocage 25 qui a subi un léger rétreint pendant l'extraction se trouve serti sur la partie d'extrémité 32 de la perche 31 et ne peut pas être séparé par simple retombée sous l'effet de la gravité lorsque les griffes 57 sont remises dans leur position rétractée.

La perche 31 étant mise dans sa position représentée sur la figure 12, le poussoir d'éjection 34 est en contact avec la surface inférieure de la paroi 66 et, par un léger mouvement vers le haut de la perche 31, on obtient un actionnement du poussoir 34 et une éjection du manchon 25 par l'ensemble d'éjection 33 qui a été décrit plus haut. Le manchon 25 tombe alors sur le plan incliné 69 qui assure le guidage du manchon vers le fond de la capacité de récupération 65.

Le plan incliné 69 sert également de détrompeur lors de la mise en place de la perche 31 à l'intérieur de la découpe 67 de la paroi 66.

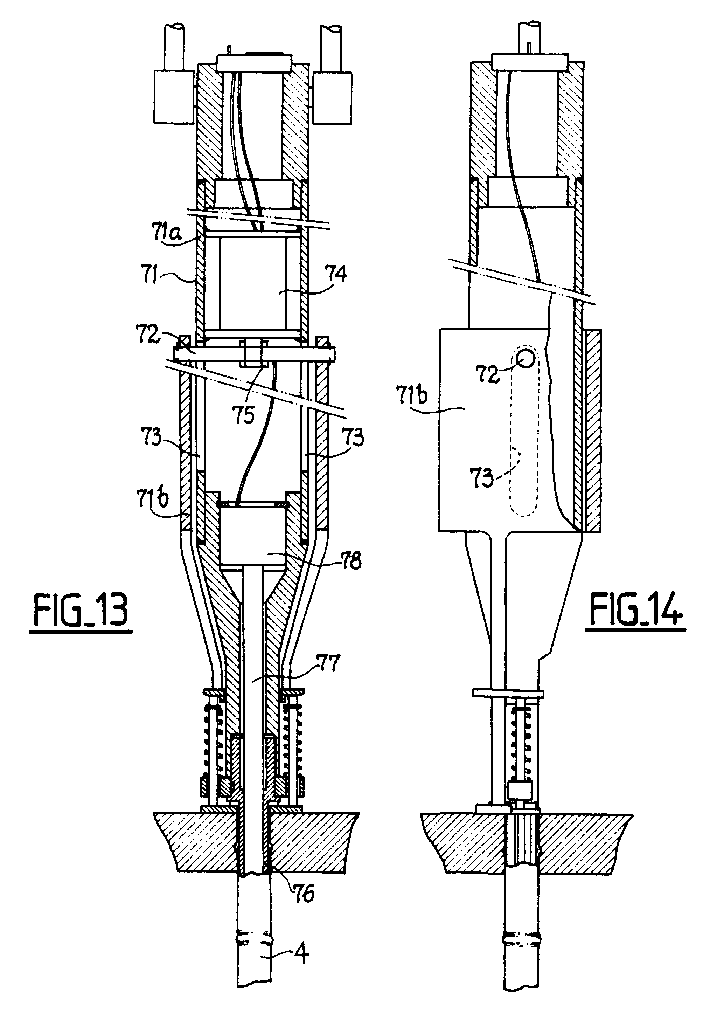

Sur les figures 13 et 14, on voit un troisième mode de réalisation d'un dispositif d'extraction suivant l'invention dans lequel la perche 71 comporte deux parties 71a et 71b montées de manière télescopique l'une par rapport à l'autre grâce à un axe 72 solidaire de l'extrémité supérieure de la partie inférieure 71b de la perche et monté à l'intérieur de deux lumières de guidage 73 traversant la paroi de la partie supérieure 71a de la perche. Un vérin 74 est fixé sur la partie 71a et comporte une tige reliée par une chape 75 à l'axe 72 solidaire de la partie 71b.

Un vérin 78 dont la tige est solidaire de la tige 77 d'actionnement des griffes du dispositif permet d'effectuer l'extraction de ces griffes en position sous le manchon de blocage ou dans la gorge 129.

En alimentant le vérin 74 de manière à provoquer la descente de sa tige, on provoque, par réaction, le soulèvement de la partie 71a de la perche et donc de la broche 76 portant les griffes engagée à l'intérieur du tube-guide 4, la partie 71b étant en appui sur l'embout par l'intermédiaire de l'ensemble d'éjection 33. On provoque ainsi l'extraction du manchon de blocage sans utiliser le pont du réacteur.

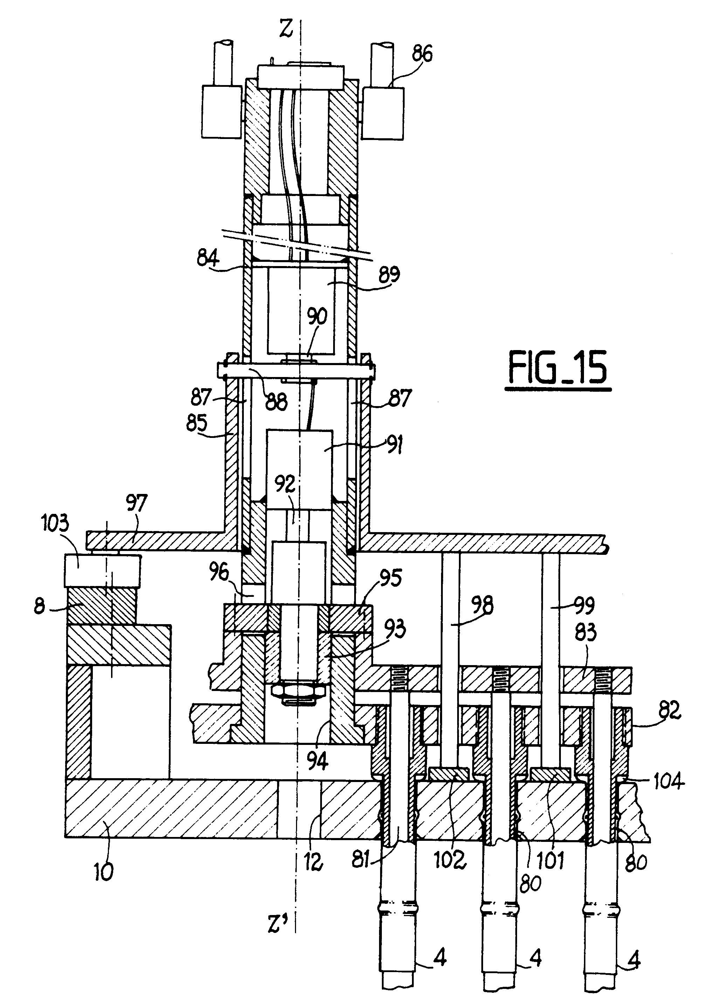

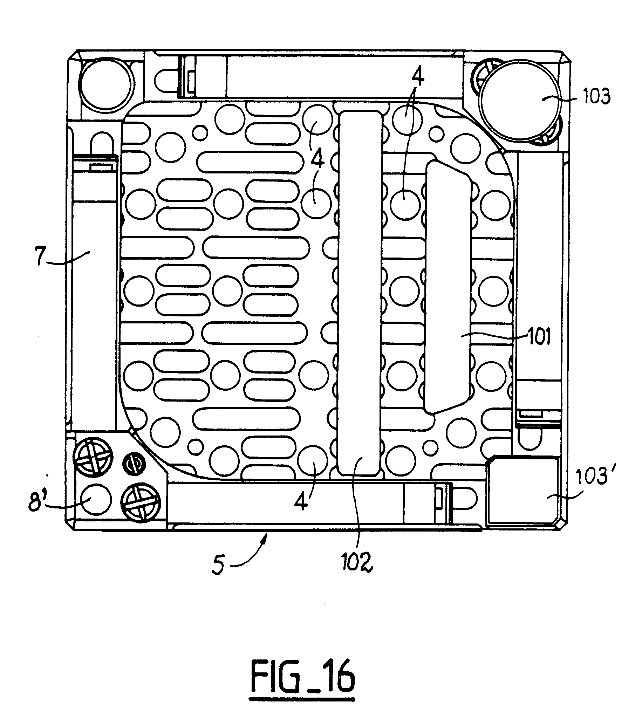

Sur les figures 15 et 16, on voit un troisième mode de réalisation d'un dispositif d'extraction suivant l'invention permettant l'extraction simultanée d'une pluralité de manchons de blocage, dans une pluralité de tubes-guides 4 d'un assemblage combustible. Un tel dispositif peut servir à réaliser l'extraction simultanée de l'ensemble des manchons de blocage des tubes-guides d'un assemblage combustible.

Le dispositif d'extraction appelé dispositif "multibroches" comporte une pluralité de broches 80 qui sont chacune constituées de la même manière que la broche 32 de la perche représentée sur la figure 10. Ces broches 80 comportent en particulier des griffes d'accrochage qui peuvent être mises en position d'extraction par déplacement vers le bas des tiges 81. Chacune des broches 80 est fixée à sa partie supérieure sur une plaque 82, cependant que chacune des tiges d'actionnement 81 des griffes est fixée à sa partie supérieure sur une contre-plaque 83.

La plaque 82 et la contre-plaque 83 sont engagées à l'intérieur de l'embout de l'assemblage et la disposition des broches et des tiges sur ces plaque et contre-plaque reproduit la disposition des tubes-guides 4 de l'assemblage. Un outil d'extraction pour un assemblage combustible de type classique comprendra ainsi vingt-quatre broches 80 munies chacune d'une tige d'actionnement 81. La perche du dispositif est constituée de deux parties 84 et 85 montées télescopiques l'une par rapport à l'autre.

La partie supérieure 84 de la perche est reliée à une anse de manutention 86 permettant la mise en place du dispositif au-dessus d'un assemblage combustible dans la piscine du réacteur. Cette partie 84 comporte deux lumières 87 dans lesquelles est engagé un axe 88 solidaire de la partie 85 de la perche.

Un vérin 89 fixé sur la partie 84 comporte une tige reliée à l'axe 88 par une chape 90. La partie inférieure 85 de la perche porte également un second vérin 91 dont la tige 92 est reliée à la contre-plaque 83 et à une douille de guidage 93 montée glissante dans un alésage lisse vertical 94 disposé à la partie inférieure de la partie 84 de la perche. La contre-plaque 83 est reliée à l'axe du vérin 92 par l'intermédiaire d'un bras 95 engagé dans des lumières 96 à la partie inférieure de la perche 84.

Lors de la mise en place de l'outillage sur l'embout d'un assemblage combustible, l'axe ZZ' de la perche est mis en coïncidence avec l'axe du trou de passage 12 du tube d'intrumentation de l'assemblage combustible disposé à sa partie centrale.

La seconde partie 85 de la perche montée de manière télescopique sur la première partie 84 est un dispositif à appui multiple venant reposer sur l'embout supérieur 5 de l'assemblage, dans des positions multiples. La partie 85 de la perche comporte une plaque d'appui 97 sur laquelle sont fixées des tiges 98, 99 elles-mêmes solidaires à leur partie inférieure de platines d'appui 101 et 102 reposant sur la plaque adaptatrice 10, entre les rangées de tubes-guides 4, comme il est visible sur la figure 16.

Les tiges 98 et 99 traversent les plaque et contre-plaque 82 et 83 par des ouvertures permettant le libre débattement de la plaque et de la contre-plaque.

La plaque 97 de la partie 85 de la perche repose également par l'intermédiaire de pions réglables tels que 103 et 103' sur les bossages 8 de l'embout supérieur 5 de l'assemblage combustible et sur les brides 8' de fixation des ressorts 7. Les pions 103 et 103' sont de formes différentes et peuvent servir de détrompeurs pour orienter le dispositif d'extraction.

Après la mise en place des broches 80 dans les tubes-guides 4 correspondants, le réglage en profondeur des broches 80 étant assuré par des cales 104 venant en appui sur la face supérieure de la plaque adaptatrice 10, le vérin 91 permet de faire descendre l'ensemble des tiges 81 par l'intermédiaire de la contre-plaque 83, dans une position provoquant l'extraction des griffes d'accrochage de chacune des broches 80.

Les griffes d'accrochage étant maintenues dans leur position d'extraction, on alimente le vérin 89 de façon à exercer une poussée sur l'axe 88. Par réaction de la pièce 85 en appui sur l'embout supérieur, la partie 84 de la perche se déplace dans la direction verticale en entraînant la plaque 82 et les broches 80 qui réalisent l'extraction de l'ensemble des manchons de blocage des tubes-guides de l'assemblage. Simultanément, la contre-plaque 83 et les tiges de manoeuvre 81 sont déplacées de manière identique, par l'intermédiaire du bras 95 entraîné par la partie 84 de la perche.

L'appui sur l'embout supérieur 5 de l'assemblage fournissant la réaction permettant de déplacer verticalement la partie 84 de la perche étant réparti sur diverses zones de la plaque adaptatrice et sur diverses parties du cadre de l'embout supérieur, il ne se produit pas de déformation de cet embout, pendant l'extraction.

On réalise donc une extraction simultanée de l'ensemble des tubes de blocage et donc un démontage complet de l'embout en un temps très court et sans entraîner de déformation de l'embout.

Le dispositif suivant l'invention permet donc de réaliser de manière rapide et sûre l'extraction des manchons de blocage des tubes-guides d'un assemblage combustible.

L'invention ne se limite pas aux modes de réalisation qui ont été décrits.

C'est ainsi qu'on peut imaginer des moyens de manoeuvre des tiges d'extraction des griffes différents de vérins.

On peut imaginer l'utilisation d'un nombre différent de griffes sur chacun des dispositifs d'extraction.

On peut également imaginer d'autres moyens permettant le déplacement vertical de la perche pour réaliser l'extraction.

Le dispositif d'éjection des manchons peut être réalisé d'une manière différente de celle qui a été décrite.

Dans le cas d'un dispositif multibroches, ce dispositif d'éjection n'est pas nécessaire dans la mesure où l'ensemble des manchons d'un assemblage est extrait en une seule opération.

Enfin, le dispositif suivant l'invention s'applique dans tous les cas où des tubes-guides sont fixés de manière démontable dans des embouts d'assemblages combustibles à l'aide de manchons de blocage.

## Revendications

1. Dispositif d'extraction d'un manchon de blocage (25) d'un tube-guide (4) dans un embout démontable (5) d'un assemblage combustible d'un réacteur nucléaire, l'assemblage constitué par un faisceau de crayons combustibles (2) parallèles maintenus dans une ossature (9) formée par des tubes-guides (4), des entretoises (3) et des embouts d'extrémité (5, 6) étant placé sous eau dans une piscine, les tubes-guides (4) en position verticale étant reliés de manière démontable à l'embout d'extrémité (5) situé au niveau supérieur de l'assemblage, grâce à une partie d'extrémité (18) du tube-guide (4) déformable radialement logée dans un trou (11) traversant l'embout supérieur (5) comportant une partie d'accrochage (17) en saillie radiale et recevant un manchon de blocage (25) dans sa partie interne pour réaliser l'expansion radiale et l'accrochage du tube-guide (4), par sa partie d'accrochage (17) dans un élargissement annulaire (16) du trou (11) de l'embout, caractérisé par le fait qu'il comporte :
- une perche (31) fixée en position verticale à un moyen de manutention et de levage disposé au-dessus de la piscine, comportant au moins une partie d'extrémité inférieure (32) appelée broche dont le diamètre est inférieur au diamètre intérieur du manchon de blocage (25) percée d'un alésage central (40) de direction axiale et d'au moins deux ouvertures radiales (56) communiquant avec l'alésage central (40) et débouchant sur la surface externe de la broche (32) de la perche (31), une tige (41) montée coulissante dans l'alésage (40) reliée à sa partie supérieure à un moyen de déplacement axial (42) porté par la perche (31) et présentant une partie à diamètre réduit par rapport à sa partie courante et au moins deux griffes d'accrochage (57), chacune montée mobile radialement dans une ouverture radiale (56), entre une position rétractée où l'extrémité externe de la griffe (57) dans la direction radiale se trouve comprise à l'intérieur du périmètre intérieur du manchon de blocage (25) et une position d'extraction où la griffe (57) est saillante par rapport au périmètre intérieur du manchon de blocage (25), grâce à la tige (41) se déplaçant de manière à présenter soit sa partie courante soit sa partie à diamètre réduit (63), en coïncidence avec les griffes (57) et à un moyen de rappel élastique (60),
- une cale (49) de réglage d'espacement entre la perche (31) et l'embout supérieur (5), pour régler la position axiale de la perche (31) par rapport au tube-guide (4) dans lequel on réalise l'extraction,
- et un moyen de déplacement vertical de la perche.

2. Dispositif d'extraction suivant la revendication 1, caractérisé par le fait que le dispositif de déplacement vertical de la perche est constitué par le treuil d'un pont de manutention et de levage de la piscine du réacteur.

3. Dispositif d'extraction suivant la revendication 1, caractérisé par le fait que la perche comporte deux parties (71a, 71b ; 84, 85) montées télescopiques l'une par rapport à l'autre dans la direction verticale et que le moyen de déplacement vertical de la perche est constitué par un vérin dont le corps est solidaire d'une des parties de la perche en appui sur l'embout supérieur (5) de l'assemblage et la tige solidaire de l'autre partie de la perche.

4. Dispositif d'extraction suivant l'une quelconque des revendications 1 à 3, caractérisé par le fait qu'il comporte, autour de l'extrémité inférieure de la perche, un ensemble (33) d'éjection de manchons de blocage comportant un poussoir (34) coulissant dans la direction axiale, solidaire d'une platine d'éjection montée coulissante autour de l'extrémité inférieure (32) de la perche par des tiges (35) et rappelée vers le haut par des moyens élastiques (37) intercalés entre une partie de la perche (31, 32) et le poussoir d'éjection (34).

5. Dispositif d'extraction suivant l'une quelconque des revendications 1 à 4, caractérisé par le fait que la partie inférieure de la perche (31) présente une forme non symétrique permettant l'introduction de sa partie inférieure (32) dans des tubes-guides situés au voisinage des parois de l'embout supérieur (5) de l'assemblage.

6. Dispositif d'extraction suivant la revendication 1, caractérisé par le fait que la partie inférieure de la perche (84, 85) porte, par l'intermédiaire d'une plaque (82), un ensemble de broches d'extraction (80) comportant chacune au moins deux griffes d'accrochage à déplacement radial et une tige d'actionnement des griffes (81) à déplacement axial, les broches (80) et les tiges d'actionnement (81) étant fixées sur des plaques (82, 83), dans des positions correspondant aux positions des tubes-guides d'un assemblage combustible.

7. Dispositif d'extraction suivant la revendication 6, caractérisé par le fait que la perche est constituée de deux parties télescopiques (84, 85), l'une de ces parties (84) portant un premier vérin (91) dont la tige est reliée à la plaque (83) sur laquelle sont fixées les tiges d'actionnement (81) des griffes d'accrochage et un second vérin (89) dont la tige est reliée à la seconde partie de la perche (85) qui comporte des dispositifs (101, 102, 103) de mise en appui sur l'embout supérieur (5) de l'assemblage combustible, la plaque (82) de support des broches (80) étant solidaire de la première partie (84) de la perche.

8. Dispositif d'extraction suivant la revendication 7, caractérisé par le fait que les dispositifs d'appui (101, 102, 103) de la seconde partie (85) de la perche sur l'embout supérieur (5) de l'assemblage combustible sont constitués par des platines en appui sur une plaque (10) de fixation des tubes-guides et par des cales réglables en appui sur des parties du cadre de l'embout supérieur (5) de l'assemblage.

9. Dispositif d'extraction suivant l'une quelconque des revendications 1 à 8, caractérisé par le fait qu'il comporte, à proximité de l'embout (5) dont on réalise le démontage, un bac de récupération (65) des manchons de blocage (28) après leur extraction.

10. Dispositif d'extraction suivant la revendication 9, caractérisé par le fait que le bac de récupération (65) comporte une paroi supérieure (66) présentant une découpe (67) ménageant une cavité (68) destinée à recevoir l'extrémité inférieure (32) de la perche (31).

11. Procédé d'extraction d'un manchon de blocage (25) d'un tube-guide (4) dans un embout démontable (5) d'un assemblage combustible d'un réacteur nucléaire, l'assemblage constitué par un faisceau de crayons combustibles (2) parallèles maintenus dans une ossature (9) formée par des tubes-guides (4), des entretoises (3) et des embouts d'extrémité (5, 6) étant placé sous eau dans une piscine, les tubes-guides (4) en position verticale étant reliés de manière démontable à l'embout d'extrémité (5) situé au niveau supérieur de l'assemblage, grâce à une partie d'extrémité (18) du tube-guide (4) déformable radialement logée dans un trou (11) traversant l'embout supérieur (5) comportant une partie d'accrochage (17) en saillie radiale et recevant un manchon de blocage (25) dans sa partie interne pour réaliser l'expansion radiale et l'accrochage du tube-guide (4), par sa partie d'accrochage (17) dans un élargissement annulaire (16) du trou (11) de l'embout, caractérisé par le fait :
- qu'on place un dispositif de récupération (65) des manchons de blocage (25) à proximité immédiate de l'embout démontable de l'assemblage,
- qu'on descend, dans la piscine, une perche (31) fixée à un moyen de manutention et comportant une partie inférieure (32) appelée broche, à l'aplomb du trou (11) recevant le tube-guide (4),
- qu'on introduit la broche (32) dans le trou (11) à une profondeur réglée par une cale (49),
- qu'on déplace, dans la direction axiale de la perche (31), une tige (41) pour réaliser l'extraction de griffes d'accrochage (57) portées par la broche (32) de la perche (31) et venant se placer en-dessous du manchon de blocage (25),
- qu'on extrait le manchon de blocage (25) en soulevant la perche (31), le manchon restant engagé sur la broche (32) de la perche (31),
- qu'on place la broche (32) de la perche (31) au-dessus du dispositif de récupération (65),
- et qu'on déplace la tige (41) pour réaliser la rétraction des griffes d'accrochage (57) et qu'on manoeuvre un poussoir (34) monté coulissant sur la perche (31), pour éjecter le manchon (25) dans le dispositif de récupération (65), le dispositif d'extraction (31) étant alors prêt pour une nouvelle extraction sans être remonté au niveau supérieur de la piscine.

## Patentansprüche

1. Vorrichtung zur Extraktion einer Blockierhülse (25) aus einem Führungsrohr (4) in einem abbaubaren Aufsatz (5) eines Brennelementeblocks eines Kernreaktors, der aus einem Bündel von parallelen Brennstäben (2) besteht, die in einem von Führungsrohren (4), Stegen (3) und Endaufsätzen (5, 6) gebildeten Gerüst (9) gehalten sind, und in einem Becken unter Wasser angeordnet ist, wobei die Führungsrohre (4) in vertikaler Stellung mit dem im oberen Niveau des Brennelementeblocks angeordneten Endaufsatz (5) durch einen radial verformbaren Endteil (18) des Führungsrohrs (4) abbaubar verbunden sind, der in einem den oberen Aufsatz (5) durchquerenden Loch (11) sitzt, einen radial hervorstehenden Einhakteil (17) umfaßt und in seinem Inneren eine Blockierhülse (25) aufnimmt, um die radiale Ausdehnung und die Einhakung des Führungsrohrs (4) mit seinem Einhakteil (17) in einer ringförmigen Erweiterung (16) des Lochs (11) des Aufsatzes zu bewirken, dadurch gekennzeichnet, daß sie umfaßt:
- ein Gestänge (31), das in vertikaler Stellung an einer über dem Becken angeordneten Förder- und Hebeeinrichtung befestigt ist und wenigstens einen unteren Endteil (32), Dorn genannt, dessen Durchmesser kleiner als der Innendurchmesser der Blockierhülse (25) ist und der mit einer zentralen Bohrung (40) axialer Richtung und wenigstens zwei radialen Öffnungen (56) versehen ist, die mit der zentralen Bohrung (40) in Verbindung sind und an der Außenfläche des Dorns (32) des Gestänges (31) ausmünden, eine in der Bohrung (40) verschiebbar montierte Stange (41), die an ihren oberen Teil mit einer von dem Gestänge (31) getragenen Einrichtung (42) zur axialen Bewegung verbunden ist und einen Teil mit einem bezüglich seines laufenden Teils kleineren Durchmesser aufweist, und wenigstens zwei Einhakklauen (57) besitzt, die jeweils in einer radialen Öffnung (56) zwischen einer eingezogenen Stellung, in der das äußere Ende der Klaue (57) in radialer Richtung sich innerhalb des Innenumfangs der Blockierhülse (25) befindet, und einer Extraktionsstellung, in der die Klaue (57) über den Innenumfang der Blockierhülse (25) hinausragt, mittels der Stange (41), die sich so bewegt, daß sie entweder ihren laufenden Teil oder ihren Teil (63) mit kleinerem Durchmesser in Übereinstimmung mit den Klauen (57) bringt, und einer elastischen Rückholeinrichtung (60) radial beweglich montiert ist,
- einen Einsatz (49) zur Einstellung des Abstands zwischen dem Gestänge (41) und dem oberen Aufsatz (5) zur Einstellung der axialen Stellung des Gestänges (31) bezüglich des Führungsrohrs (4), in dem die Extraktion vorgenommen wird,
- und eine Einrichtung zur vertikalen Bewegung des Gestänges.

2. Extraktionsvorrichtung nach Anspruch 1, dadurch gekennzeichnet, daß die Vorrichtung zur vertikalen Bewegung des Gestänges aus der Winde einer Förder- und Hebebrücke des Beckens des Reaktors besteht.

3. Extraktionsvorrichtung nach Anspruch 1, dadurch gekennzeichnet, daß das Gestänge zwei in vertikaler Stellung zueinander teleskopisch montierte Teile (71a, 71b, 84, 85) umfaßt und daß die Einrichtung zur vertikalen Bewegung des Gestänges aus einer Kolben-Zylinder-Einheit besteht, deren Körper mit einem der Teil des Gestänges, der auf dem oberen Aufsatz (5) des Brennelementeblocks aufliegt, und deren Stange mit dem anderen Teil des Gestänges fest verbunden ist.

4. Extraktionsvorrichtung nach einem der Ansprüche 1 bis 3, dadurch gekennzeichnet, daß sie eine das untere Ende des Gestänges umgebende Einheit (33) zum Ausstoß von Blockierhülsen aufweist, die einen in axialer Richtung gleitenden Drücker (34) besitzt, der mit einer Ausstoßplatine fest verbunden ist, die auf dem unteren ende (32) des Gestänges über Stangen (35) verschiebbar montiert ist und nach durch elastische Mittel (37) zurückgeholt ist, die zwischen einen Teil des Gestänges (31, 32) und den Auswurfdrücker (34) eingesetzt sind.

5. Extraktionsvorrichtung nach einem der Ansprüche 1 bis 4, dadurch gekennzeichnet, daß der untere Teil des Gestänges (31) eine nicht symmetrische Form besitzt, die die Einführung seines unteren Teils (32) in Führungsrohre gestattet, die in Nähe der Wände des oberen Aufsatzes (5) des Brennelementeblocks angeordnet sind.

6. Extraktionsvorrichtung nach Anspruch 1, dadurch gekennzeichnet, daß der untere Teile des Gestänges (84, 85) über eine Platte (82) eine Gruppe von Extraktionsdornen (80) trägt, die jeweils wenigstens zwei sich radial bewegende Einhakklauen und eine sich axial bewegende Stange (81) zur Betätigung der Klauen besitzt, wobei die Dorne (80) und die Betätigungsstangen (81) an Platten (82, 83) in den Stellungen der Führungsrohre eines Brennelementeblocks entsprechenden Stellungen befestigt sind.

7. Extraktionsvorrichtung nach Anspruch 6, dadurch gekennzeichnet, daß das Gestänge aus zwei teleskopischen Teilen (84, 85) besteht, deren einer (84) eine erste Kolben-Zylinder-Einheit (91), deren Stange mit der Platte (83) verbunden ist, an der die Bestätigungsstangen (81) der Einhakklauen befestigt sind, und eine zweite Kolben-Zylinder Einheit (89) trägt, deren Stange mit dem ersten Teil (85) des Gestänges verbunden ist, der Vorrichtungen (101, 102, 103) zur Auflage auf den oberen Aufsatz (5) des Brennelementeblocks umfaßt, wobei die die Dorne (80) tragende Platte (82) mit dem ersten Teil (84) des Gestänges fest verbunden ist.

8. Extraktionsvorrichtung nach Anspruch 7, dadurch gekennzeichnet, daß die Vorrichtungen (101, 102, 103) des zweiten Teil (85) des Gestänges zur Auflage auf dem oberen Aufsatz (5) des Brennelementeblocks aus auf einer Platte (10) zur Befestigung der Führungsrohre aufliegenden Platinen und aus verstellbaren Einlagen bestehen, die auf Teilen des Rahmens des oberen Aufsatzes (5) des Brennelementeblocks aufliegen.

9. Extraktionsvorrichtung nach einem der Ansprüche 1 bis 8, dadurch gekennzeichnet, daß sie in Nähe des Aufsatzes (5), dessen Abbau vorgenommen wird, einen Behälter (65) zur Aufnahme der Blockierhülsen (28) nach ihrer Extraktion umfaßt.

10. Extraktionsvorrichtung nach Anspruch 9, dadurch gekennzeichnet, daß der Aufnahmebehälter (65) eine obere Wand (66) besitzt, die einen Ausschnitt (67) mit einer Vertiefung (68) aufweist, die zur Aufnahme des unteren Endes (32) des Gestänges (31) dient.

11. Verfahren zur Extraktion einer Blockierhülse (25) aus einem Führungsrohr (4) in einem abbaubaren Aufsatz (5) eines Brennelementeblocks eines Kernreaktors, der aus einem Bündel von parallelen Brennstäben (2) besteht, die in einem von Führungsrohren (4), Stegen (3) und Endaufsätzen (5, 6) gebildeten Gerüst (9) gehalten sind, und in einem Becken unter Wasser angeordnet ist, wobei die Führungsrohre (4) in vertikaler Stellung mit dem im oberen Niveau des Brennelementeblocks angeordneten Endaufsatz (5) durch einen radial verformbaren Endteil (18) des Führungsrohrs (4) abbaubar verbunden sind, der in einem den oberen Aufsatz (5) durchquerenden Loch (11) sitzt, einen radial hervorstehenden Einhakteil (17) umfaßt und in seinem Inneren eine Blockierhülse (25) aufnimmt, um die radiale Ausdehnung und die Einhakung des Führungsrohrs (4) mit seinem Einhakteil (17) in einer ringförmigen Erweiterung (16) des Lochs (11) des Aufsatzes zu bewirken, dadurch gekennzeichnet,
- daß die Vorrichtung (65) zur Aufnahme der Blockierhülsen (25) in unmittelbarer Nähe des abbaubaren Aufsatzes des Brennelementeblocks angeordnet wird,
- daß ein Gestänge 31, das an einer Fördereinrichtung befestigt ist und einen unteren Teil (32), Dorn genannt, aufweist, senkrecht über dem das Führungsrohr (4) aufnehmenden Loch (11) in das Becken herabbewegt wird,
- daß der Dorn (32) in das Loch (11) mit einer durch eine Einlage (49) eingestellten Tiefe eingeführt wird,
- daß eine Stange (41) in der axialen Richtung des Gestänges (31) bewegt wird, um Einhakklauen (57) auszufahren, die von dem Dorn (32) des Gestänges (31) getragen sind und unter die Blockierhülse (65) gelangen,
- daß die Blockierhülse (25) extrahiert wird, indem das Gestänge (31) nach oben bewegt wird, wobei die Hülse auf den Dorn (32) des Gestänges (31) aufgesteckt bleibt,
- daß der Dorn (32) des Gestänges (31) über die Aufnahmevorrichtung (65) gebracht wird,
- daß die Stange (41) zum Einfahren der Einhakklauen (57) bewegt wird und daß ein auf dem Gestänge (31) verschiebbar montierter Drücker (34) betätigt wird, um die Hülse (25) in die Aufnahmevorrichtung (65) auszustoßen, wobei die Extraktionsvorrichtung (31) nun für eine neue Extraktion bereit ist, ohne über das Becken angehoben zu werden.

## Claims

1. Device for extraction a blocking sleeve (25) from a guide tube (4) in a removable connector (5) of a fuel assembly of a nuclear reactor, the assembly, consisting of a bundle of parallel fuel rods (2) held in a framework (9) formed by a guide tubes (4), spacers (3) and end connectors (5, 6), being placed under water in a pool, the guide tubes (4) in the vertical position being connected removably to the end connector (5) located at the upper level of the assembly by means of a radially deformable end part (18) of the guide tube (4) which is seated in a hole (11) passing through the upper connector (5) and which has a radially projecting retention part (17) and receives a blocking sleeve (25) in its inner part, in order to ensure the radial expansion and retention of the guide tube (4) by means of its retention part (17) in an annular widening (16) of the hole (11) of the connector, characterized in that it comprises:
- a pole (31) which is fastened in the vertical position to a handling and lifting means arranges above the pool and which has at least one lower end part (32), called a spindle, the diameter of which is less that the inside diameter of the blocking sleeve (25) and which is pierced with an axially directed central bore (40) and with at least two radial orifices (56) communicating with the central bore (40) and opening onto the outer surface of the spindle (32) of the pole (31), a rod (41) which is mounted slideably in the bore (40) and which is connected, in its upper part, to a means (42) of axial movement carried by the pole (31) and has a part of a diameter reduced relative to its running part, and at least two retention claws (57), each mounted in a radial orifice (56) radially movably between a retracted position, in which the outer end of the claw (57) in the radial direction is contained within the inner perimeter of the blocking sleeve (25), and an extraction position, in which the claw (57) projects relative to the inner perimeter of the blocking sleeve (25), by means of the rod (41) moving in such a way as to bring either its running part or its part of reduced diameter (63) into coincidence with the claws (57), and by an elastic return means (60),
- a shim (49) for adjusting the spacing between the pole (31) and the upper connector (5), in order to adjust the axial position of the pole (31) relative to the guide tube (4) in which extraction is being carried out,
- and a means for the vertical movement of the pole.

2. Extraction device according to Claim 1, characterized in that the device for the vertical movement of the pole consist of the winch of a handling and lifting crane of the pool of the reactor.

3. Extraction device according to Claim 1, characterized in that the pole comprises two parts (71a, 71b; 84, 85) mounted telescopically relative to one another in the vertical direction, and in that the means for the vertical movement of the pole consists of a jack, the body of which is fixed to one of the parts of the pole bearing on the upper connector (5) of the assembly and the rod of which is fixed to the other part of the pole.

4. Extraction device according to any one of Claims 1 to 3, characterized in that it possesses, round the lower end of the pole, a unit (33) for the ejection of blocking sleeves, comprising a pusher (34) sliding in the axial direction and fixed to an ejector plate mounted slideably round the lower end (32) of the pole by means of stems (35) and returned upwards by elastic means (37) inserted between a part of the pole (31, 32) and the ejecting pusher (34).

5. Extraction device according to any one of Claims 1 to 4, characterized in that the lower part of the pole (31) has an asymmetric form allowing its lower part (32) to be introduced into guide tubes located in the vicinity of the walls of the upper connector (5) of the assembly.

6. Extraction device according to Claim 1, characterized in that the lower part of the pole (84, 84) carries, by means of a plate (82), a set of extraction spindles (80), each possessing at least two radially movable retention claws and a rod for actuating the axially movable claws (81), the spindles (80) and the actuating rods (81) being fastened to plates (82, 83) in positions corresponding to the positions of the guide tubes of a fuel assembly.

7. Extraction device according to Claim 6, characterized in that the pole consist of two telescopic parts (84, 85), one of these parts (84) carrying a first jack (91), the rod of which is connected to the plate (83) to which are fastened the actuating rods (81) of the retention claws, and a second jack (89), the rod of which is connected to the second part of the pole (85) having devices (101, 102, 103) for bearing on the upper connector (5) of the fuel assembly, the support plate (82) of the spindles (80) being to the first part (84) of the pole.

8. Extraction device according to Claim 7, characterized in that the devices (101, 102, 103) for the bearing of the second part (85) of the pole on the upper connector (5) of the fuel assembly consist of blocks bearing on a fastening plate (10) of the guide tubes and of adjustable shims bearing on parts of the frame of the upper connector (5) of the assembly.

9. Extraction device according to any one of Claims 1 to 8, characterized in that it possesses, in the vicinity of connector (5) which is being removed, a bin (65) for recovering the blocking sleeves (28) after they have been extracted.

10. Extraction device according to Claim 9, characterized in that the recovery bin (65) comprises an upper wall (66) having a cutout (67) forming a cavity (68) intended for receiving the lower end (32) of the pole (31).

11. Process for extracting a blocking sleeve (25) from a guide tube (4) in a removable connector (5) of a fuel assembly of a nuclear reactor, the assembly, consisting of a bundle of parallel fuel rods (2) held in a framework (9) formed by guide tubes (4), spacers (3) and end connectors (5, 6), being placed under water in a pool, the guide tubes (4) in the vertical position being connected removably to the end connector (5) located at the upper level of the assembly by means of a radially deformable end part (18) of the guide tube (4) which is seated in a hole (11) passing through the upper connector (5) and which has a radially projecting retention part (17) and receives a blocking sleeve (25) in its inner part, in order to ensure the radial expansion and retention of the guide tube (4) by means of its retention part (17) in an annular widening (16) of the hole (11) of the connector, characterized in that:
- a device (65) for recovering the blocking sleeves (25) is placed in the immediate vicinity of the removable connector of the assembly,
- a pole (31) is lowered into the pool, which pole is fastened to a handling means and has a lower part (32) called a spindle, vertically in line with the hole (11) receiving the guide tube (4),
- the spindle (32) is introduced into the hole (11) at a depth adjusted by a shim (49),
- a rod (41) is moved, in the axial direction of the pole (31), in order to ensure the extraction of the retention claws (57) carried by the spindle (32) of the pole (31) and being placed below the blocking sleeve (25),
- the blocking sleeve (25) is extracted while raising the pole (31), the sleeve remaining engaged on the spindle (32) of the pole (31),
- the spindle (32) of the pole (31) is placed above the recovery device (65),
- and the rod (41) is moved in order to ensure the retraction of the retention claws (57) and a pusher (34) mounted slideably on the pole (31) is manoeuvred in order to eject the sleeve (25) in the recovery device (65), the extraction device (31) then being ready for a new extraction without being raised to the upper level of the pool.
